# EUROPEAN PATENT APPLICATION

(11) **EP 4 620 912 A1**
(43) Date of publication of application: **24.09.2025**
(21) Application number: 23891091.3
(22) Date of filing: 13.07.2023
(51) Int. Cl.: C01B 33/22, C08L 101/00, C08K 3/013, C08K 3/34

(54) **TALC POWDER, AGENT FOR IMPROVING PROPERTIES OF RESIN, AND RESIN COMPOSITION**

(30) Priority: 15.11.2022 JP 2022182399
(71) Applicant: Hayashi Kasei Co., Ltd., Osaka-shi Osaka 530-0043 (JP)
(72) Inventor: IKEDA TAKAO, Osaka-shi Osaka 530-0043 (JP); NAGATA KAZUYA, Osaka-shi Osaka 530-0043 (JP)
(74) Representative: Hoffmann Eitle
(86) International application number: PCT/JP2023/025899
(87) International publication number: WO 2024/105929

(57) **Abstract**

Provided is a talc powder having a B/A value of 0.10 or less wherein A (m²/g) represents a BET specific surface area of the talc powder and B (% by mass) represents a weight loss determined by a thermogravimetry-differential thermal analysis at 200 to 700°C.

## Description

### TECHNICAL FIELD

The present invention relates to a talc powder, an agent for improving properties of a resin, and a resin composition.

### BACKGROUND ART

At the time of producing a resin molded body, various fillers are blended in a resin raw material for the purpose of improving properties such as a mechanical strength. As such a filler, for example, talc is widely used. Talc is the softest in rock-forming minerals, has a cleavage property and is easy to peel off, has a smooth feel, and is chemically stable, and thus is widely used by being mixed with various raw materials.

Talc is applied in a wide range of fields such as plastics (resins), papermaking, cosmetics, medicine, fertilizers, paints, and ceramics owing to its excellent versatility. For example, a resin composition blended with talc is widely used in various fields such as automobile parts, home appliance parts, or office equipment parts.

On the other hand, with the advancement of technologies in various fields, there is an increasing tendency to try to achieve a high property level at a material design stage. For the widely used talc, various improvements have been made to bring out its inherent effective properties.

For example, Patent Literature 1 proposes a granular talc obtained by degassing powdered talc having an average primary particle diameter of 0.1 µm to 10 µm without directly compressing the powdered talc and then compressing the powdered talc, the talc having a bulk density of 0.6 g/cm³ to 0.94 g/cm³ and a breakage rate of 70% by weight to 100% by weight.

### CITATION LIST

### PATENT LITERATURE

Patent Literature 1: JP2005-104794A

### SUMMARY OF INVENTION

### TECHNICAL PROBLEM

However, Patent Literature 1 examines whether the talc has excellent dispersibility when added to a thermoplastic resin and melt-mixed, but does not examine whether properties of the resin (for example, properties such as flexural modulus) can be improved. That is, it cannot be said that a high property level is achieved at a material design stage.

In view of the above, an object of the present invention is to provide a talc powder that, when added to a resin to form a resin composition, can improve properties of the resin as compared with a case where a related-art talc powder is added.

### SOLUTION TO PROBLEM

As a result of intensive studies to solve the above problems, the present inventors have found that the problems can be solved by the present invention described below. That is, the present invention is as follows.
[1] A talc powder, in which a value of B/A is 0.10 or less, where A is a BET specific surface area with a unit of (m²/g), and B is a weight loss rate by thermogravimetric differential thermal analysis at 200°C to 700°C with a unit of (mass%).
[2] The talc powder according to [1], in which the BET specific surface area is 3 m²/g to 20 m²/g.
[3] The talc powder according to [1] or [2], in which a bulk density is 0.05 g/cm³ to 0.35 g/cm³.
[4] The talc powder according to any one of [1] to [3], in which a median diameter (D50) is 1 µm to 10 µm.
[5] An agent for improving properties of a resin, including the talc powder according to any one of [1] to [4].
[6] A resin composition including the talc powder according to any one of [1] to [4] and a resin.
[7] A resin composition including the agent for improving properties of a resin according to [5] and a resin.

### ADVANTAGEOUS EFFECTS OF INVENTION

According to the present invention, it is possible to provide a talc powder that, when added to a resin to form a resin composition, can improve properties of the resin as compared with a case where a related-art talc powder is added.

### DESCRIPTION OF EMBODIMENTS

### [Talc Powder]

In a talc powder according to one embodiment (present embodiment) of the present invention, when a BET specific surface area is A (m²/g), and a weight loss rate by thermogravimetric differential thermal analysis at 200°C to 700°C is B (mass%), B/A is 0.10 or less.

The fact that the above B/Ais 0.10 or less indicates that an amount of moisture present on a usual talc powder is very low. In other words, it can be inferred that a surface of the talc powder is in a highly hydrophobic state, and thus it is considered that the affinity with a resin is enhanced, and properties (particularly, an elastic modulus) of the resin can be improved.

The value of B/A is preferably 0.02 to 0.09, and more preferably 0.025 to 0.085.

The weight loss rate B by the thermogravimetric differential thermal analysis can be measured and obtained by the following method using a known device, for example.

7 mg of a talc powder sample is placed in a differential thermal-balance (for example, device name: ThermoPlus2, manufactured by Rigaku Corporation) and heated (room temperature to 950°C), during which the weight loss rate (mass%) is obtained at 200°C to 700°C. A heating rate is 10°C/min. A measurement atmosphere is preferably a nitrogen atmosphere.

The weight loss rate B (mass%) is preferably 1.2 mass% or less, more preferably 1 mass% or less, and still more preferably 0.7 mass% or less from the viewpoint of exhibiting an effect owing to hydrophobicity. A lower limit of the weight loss rate B is not particularly limited, and is practically about 0.05 mass%.

In order to make B/A in the present embodiment 0.10 or less, for example, it is preferable to pulverize raw talc under conditions of a higher temperature and a higher shear force than pulverization conditions by a normal jet mill. Specifically, it is preferable to prepare the talc powder by adjusting a temperature, a pressure, and the like, using a pulverizing method capable of instantaneously applying a high shear force at a high temperature using superheated steam (saturated steam and steam obtained by further heating the saturated steam) as fluid energy, such as a steam jet mill to be described later.

In the present embodiment, a bulk density (packed state) of the talc powder is preferably 0.05 g/cm³ to 0.35 g/cm³, more preferably 0.10 g/cm³ to 0.30 g/cm³, and still more preferably 0.13 g/cm³ to 0.28 g/cm³. When the bulk density is 0.05 g/cm³ to 0.35 g/cm³, a higher elastic modulus is easily obtained when the talc powder is mixed with the resin.

The above bulk density indicates that the talc powder of the present embodiment is in a very bulky state. Usually, a particle diameter and an aspect ratio of the talc powder are designed to be optimum on a premise that the bulk density is increased in consideration of handleability such as transportation. On the other hand, in the present embodiment, the focus is on a "state of low bulk density (= very bulky state)" that is easily excluded from the study according to common technical knowledge, and the present invention is achieved based on an idea that is not limited to common technical knowledge.

Here, the bulk density can be obtained by a packed bulk density measured using a powder property evaluation device (Powder Tester PT-X, manufactured by Hosokawa Micron Corporation). As measurement conditions, a sample is supplied to a sieve having an opening of 710 µm, the sample is added such that a powder surface position of a cap placed on a 100 cm³ bulk density measurement cup is constant by vibration having an amplitude of 1.5 mm, and tapping is performed 180 times.

A median diameter (volume basis, D50) of the talc powder according to the present embodiment is preferably 1 µm to 10 µm, more preferably 1.5 µm to 9.5 µm, and still more preferably 1.7 µm to 8.5 µm, from the viewpoint of obtaining a high elastic modulus when the talc powder is mixed with the resin. In addition, D50 is preferably 2.3 µm to 8 µm, and more preferably 2.3 µm to 7 µm.

Here, the median diameter can be obtained as a volume-based median diameter (D50: a particle diameter at a cumulative volume of 50% from a small particle diameter side) by measuring a particle size distribution using a laser diffraction particle size distribution measuring device (SALD-200 V ER, manufactured by Shimadzu Corporation).

The specific surface area (BET specific surface area) of the talc powder of the present embodiment is preferably 3 m²/g to 20 m²/g, more preferably 3 m²/g to 18 m²/g, still more preferably 6.0 m²/g to 16.0 m²/g, even more preferably 6.5 m²/g to 15.0 m²/g, and yet still more preferably 6.5 m²/g to 14.0 m²/g.

When the specific surface area is 3 m²/g to 20 m²/g, a high elastic modulus can be obtained when the talc powder is mixed with the resin.

Here, the specific surface area can be obtained by measurement using a specific surface area/pore distribution measuring device (BELSORP MINI **II,** manufactured by MicrotracBEL Corp). The sample is preferably prepared by drying at 100°C for 90 minutes using a vacuum dryer.

The talc powder according to the present embodiment is preferably natural talc (non-synthetic talc) rather than synthetic talc. Synthetic talc is talc produced by chemical synthesis, and is obtained by, for example, a hydrothermal synthesis method in which a raw material containing magnesium and silicon is heated at a high temperature under pressure. On the other hand, natural talc is a mineral that is produced naturally. Natural talc may contain calcium carbonate, dolomite, or the like as a minor component. Such a minor component exhibits a function of improving impact resistance when added to a resin. Therefore, as the talc powder according to the present embodiment, a natural talc powder is preferred.

### [Method for Producing Talc Powder]

A method for producing the talc powder according to the present embodiment includes a pulverization step of pulverizing raw talc with a steam jet mill.

As described above, in a pulverization treatment using the steam jet mill, since the superheated steam is used as the fluid energy for pulverization, a high shear force can be instantaneously applied. Therefore, as compared with a jet mill under general conditions using compressed air as fluid energy, a larger shear force acts on the raw talc powder instantaneously, so that moisture on a surface is efficiently removed, and good hydrophobicity is exhibited. Therefore, it is considered that when the talc powder is mixed with a resin to form a resin composition, an effect of improving inherent properties of the talc powder is easily exhibited at a high level.

In the pulverization treatment by the steam jet mill, for example, a temperature of the superheated steam in the steam jet mill pulverization (temperature before entering a pulverization area) is preferably 300°C to 500°C, and a pressure of the superheated steam (pulverization pressure) is preferably 3.5 MPa to 15.0 MPa in gauge pressure.

By appropriately adjusting within the above ranges, the above B/A, bulk density, specific surface area, average particle diameter (D50), and the like can be set within desired ranges, respectively.

The superheated steam can be generated at a desired temperature by a commercially available boiler, super heater (steam super heater), or the like.

The raw talc preferably has a median diameter D₀ of 11 µm to 20 µm and a bulk density of 0.5 g/cm³ to 2 g/cm³. Within these ranges, good pulverization efficiency is obtained, and the talc powder according to the present embodiment is easily obtained.

The talc powder (pulverized talc powder) obtained as described above can be applied to various applications by performing a classification treatment or the like as necessary.

### [Agent for Improving Properties of Resin]

An agent for improving properties of a resin according to the present embodiment contains the talc powder according to the present embodiment. By mixing the agent for improving properties of a resin with a resin (for example, a thermoplastic resin to be described later), properties of the resin (particularly, an elastic modulus) can be improved. That is, the talc powder is suitable as an agent for improving properties of a resin for addition to a resin (including a resin composition).

A content of the talc powder according to the present embodiment in the agent for improving properties of a resin is preferably 90 mass% or more, more preferably 95 mass% or more, and still more preferably 100 mass%, from the viewpoint of sufficiently exhibiting an effect the talc powder.

The agent for improving properties of a resin may contain, for example, a surface treatment agent such as a silane coupling agent or an acid-modified polymer (for example, maleic acid-modified PP).

### [Resin Composition]

A resin composition according to the present embodiment contains the talc powder of the present embodiment described above (or the agent for improving properties of a resin of the present embodiment described above) and a resin.

Examples of the resin include a thermoplastic resin (including a thermoplastic elastomer for convenience), a thermosetting resin, a rubber, and a cellulose resin.

Examples of the above thermoplastic resin include olefin resins such as polypropylene, polyethylene, a 4-methylpentene-1 resin, a polybutene-1 resin, an ethylene-propylene random copolymer, an ethylene-propylene block copolymer, a propylene-1-butene copolymer, a propylene-ethylene-butene-1 copolymer, a propylene-4-methylpentene copolymer, an ethylene-butene-1 copolymer, an ethylene-hexene copolymer, an ethylene-heptene copolymer, an ethylene-octene copolymer, an ethylene-4-methylpentene copolymer, an ethylene-vinyl acetate copolymer, an ethylene-acrylic acid copolymer, an ethylene-acrylic acid ester copolymer, an ethylene-methacrylic acid copolymer, and an ethylene-methacrylic acid ester copolymer; styrene resins such as a styrene homopolymer, an acrylonitrile-styrene copolymer (AS resin), and an acrylonitrile-butadiene-styrene copolymer (ABS resin); polyvinyl chloride, polyvinylidene chloride; fluororesins such as polytetrafluoroethylene, a tetrafluoroethylene-perfluoroalkyl vinyl ether copolymer, a tetrafluoroethylene-hexafluoropropylene copolymer, an ethylene-tetrafluoroethylene copolymer, a polychlorotrifluoroethylene resin, and polyvinylidene fluoride; polyvinyl alcohol; polyamide resins such as nylon 6, nylon 6,6, nylon 6,10, nylon 11, nylon 12, nylon 6,12, polyhexamethylene diamine terephthalamide, polyhexamethylene diamine isophthalamide, and a xylene group-containing polyamide; polyester resins such as polyethylene terephthalate and polybutylene terephthalate; acrylic resins such as polymethyl acrylate and polymethyl methacrylate; polyoxymethylene resins such as a polyoxymethylene homopolymer and a polyoxymethylene copolymer; polycarbonate; polyacetal; polyphenylene ether; polyether sulfone; polyether ketone; and a liquid polyester.

Examples of the above thermoplastic elastomer include a polyolefin-based thermoplastic elastomer, a polystyrene-based thermoplastic elastomer, a polyester-based thermoplastic elastomer, a polyamide-based thermoplastic elastomer, a low-crystalline 1,2-polybutadiene-based thermoplastic elastomer, a fluorine-based thermoplastic elastomer, a chlorinated polymer-based thermoplastic elastomer, and an ion-crosslinked thermoplastic elastomer.

Examples of the above thermosetting resin include a phenol resin, a urea resin, a melamine resin, an alkyd resin, a thermosetting acrylic resin, an unsaturated polyester resin, a diallyl phthalate resin, an epoxy resin, a thermosetting silicone resin, a thermosetting polyimide, a thermosetting resin derived from cyclopentadiene, a thermosetting resin derived from an aromatic nitrile, a furan resin, a ketone resin, a xylene resin, and a thermosetting resin containing a condensed polycyclic aromatic.

Examples of the above rubber include a natural rubber, a styrene butadiene rubber, a butadiene rubber, a chloroprene rubber, an isoprene rubber, an isobutylene-isoprene rubber, a butyl rubber, an ethylene propylene rubber, an acrylonitrile butadiene rubber, a nitrile rubber, a silicone rubber, a fluororubber, an acrylic rubber, and an epichlorohydrin rubber.

Examples of the above cellulose resin include acetyl cellulose, acetyl propionyl cellulose, acetyl butyl cellulose, ethyl cellulose, and nitrocellulose.

A content of the talc powder according to one aspect of the present invention is preferably 0.5 parts by mass to 60 parts by mass, and more preferably 1 part by mass to 35 parts by mass, per 100 parts by mass of the resin in the resin composition.

The resin composition according to one aspect of the present invention may contain one or more of an antioxidant, a heat stabilizer, a weather resistance improver, a release agent, a lubricant, a pigment, a dye, a plasticizer, an antistatic agent, a flame retardant, and the like, as necessary. In addition, a filler other than the talc powder according to one aspect of the present invention may be contained as necessary. Examples of such the filler include calcium carbonate, clay, synthetic silicon, titanium oxide, carbon black, barium sulfate, mica, glass fibers, whiskers, carbon fibers, magnesium carbonate, kaolin, graphite, molybdenum disulfide, and zinc oxide.

Furthermore, depending on applications, a solvent or a dispersion medium may be contained to form a liquid resin composition.

The talc powder may be blended and kneaded into the resin by a known method. For example, a commonly used single-screw kneading extruder, twin-screw kneading extruder, or the like may be used for blending and kneading with polypropylene.

The resin composition according to the present embodiment may be used for various applications such as automobile interior and exterior parts, home appliance parts, and office equipment parts.

### Examples

Next, the present invention will be described in detail with reference to Examples, but the present invention is not limited thereto.

### [Talc Powder]

Raw talc having a median diameter (D50) of 12.7 µm and a bulk density of 0.72 g/cm³ (the above D50 was obtained by coarsely pulverizing talc produced in Pakistan with a roller mill) was pulverized to median diameters shown in Table 1 with a steam jet mill (hereinafter sometimes referred to as "s-JET") and a jet mill.

### (1) Pulverization Conditions with Steam Jet Mill

·A device used was a steam jet mill s-JET150 manufactured by Netzsch Trockenmahltechnik.
·Temperature of superheated steam (temperature before entering a pulverization area): 360°C
·Pulverization pressure (gauge pressure): 3.8 MPa

A particle size was adjusted by adjusting a rotation speed of a classifier attached to the steam jet mill.

### (2) Pulverization Conditions with Jet Mill

·A device used was a counter jet mill AFG710/4 manufactured by Hosokawa Micron Corporation. A particle size was adjusted by adjusting a rotation speed of a classifier attached to the jet mill.

In the case of D50 = 2.2 µm (Comparative Example 1), the particle size was adjusted by classifying after pulverization.

With the s-JET, a bulky pulverized talc powder was obtained. On the other hand, with the jet mill, a pulverized talc powder having a small bulk when viewed at the same D50 as with the s-JET was obtained. It is considered that this is because, with a jet mill under normal conditions, a residence time of pulverization is long, and thus not only a shear force but also isotropic forces act on the talc, causing further pulverizing rather than just surface peeling.

### (Resin Composition)

A resin composition produced using the talc powder produced as described above was evaluated as follows.

### Evaluation: Flexural modulus

A flexural modulus was measured according to JIS K7171. Results are shown in Table 2.

The resin composition was injection molded using an injection molding mold (JIS K7171 Type B1), and a flexural modulus of a molded product (10 mm (width) x 4 mm (thickness) x 80 mm (length)) obtained was evaluated according to JIS K7171 using Autograph AG-Xplus manufactured by corporation. (temperature: 23°C, bending speed: 2 mm/min).

A resin of the resin composition constituting the molded product was a polypropylene resin (PX-600N, SunAllomer Ltd.), and the talc powder was 20 parts by mass per 100 parts by mass of the polypropylene resin.

**[Table 1]**

| | | Example | | | Comparative Example | | | |
|---|---|---|---|---|---|---|---|---|
| | | 1 | 2 | 3 | 1 | 2 | 3 | 4 |
| D50 | µm | 2.1 | 4.9 | 7.5 | 2.2 | 4.8 | 7.3 | 4.7 |
| packed bulk density | g/cm³ | 0.15 | 0.18 | 0.27 | 0.32 | 0.36 | 0.41 | 0.39 |
| Specific surface area A | m²/g | 13.5 | 8.0 | 7.1 | 14.0 | 9.9 | 8.0 | 9.8 |
| Weight loss rate B | % | 0.40 | 0.58 | 0.60 | 1.50 | 1.66 | 1.70 | 1.68 |
| B/A | | 0.03 | 0.07 | 0.08 | 0.11 | 0.17 | 0.21 | 0.17 |
| Flexural modulus | MPa | 3770 | 3800 | 3690 | 3380 | 3470 | 3460 | 3386 |

From Table 1, in Examples 1 to 3 in which B/A was 0.10 or less, properties of the resin could be improved as compared with Comparative Examples 1 to 3. In other words, it can be said that the talc powder is suitable as an agent for improving properties of a resin for addition to a resin or a resin composition.

## Claims

1. A talc powder, wherein a value of B/A is 0.10 or less, where A is a BET specific surface area with a unit of (m²/g), and B is a weight loss rate by thermogravimetric differential thermal analysis at 200°C to 700°C with a unit of (mass%).

2. The talc powder according to claim 1, wherein the BET specific surface area is 3 m²/g to 20 m²/g.

3. The talc powder according to claim 1, wherein a bulk density is 0.05 g/cm³ to 0.35 g/cm³.

4. The talc powder according to claim 1, wherein a median diameter (D50) is 1 µm to 10 µm.

5. An agent for improving properties of a resin, comprising the talc powder according to any one of claims 1 to 4.

6. A resin composition comprising the talc powder according to any one of claims 1 to 4 and a resin.
